# EUROPÄISCHE PATENTSCHRIFT

(11) **EP 1 342 604 B1**
(45) Veröffentlichungstag und Bekanntmachung des Hinweises auf die Patenterteilung: **17.11.2004**
(21) Anmeldenummer: 03004592.6
(22) Anmeldetag: 01.03.2003
(51) Int. Cl.: B60K 11/04

(54) **Kühlerbefestigung in einem Kraftfahrzeug**
Radiator fixing in a vehicle
Fixation d'un radiateur dans un véhicule automobile

(30) Priorität: 08.03.2002 DE 10210345
(43) Veröffentlichungstag der Anmeldung: 10.09.2003
(73) Patentinhaber: ADAM OPEL AG, 65423 Rüsselsheim (DE)
(72) Erfinder: Schork, Manfred, 64646 Heppenheim (DE)

(56) Entgegenhaltungen:
- EP-A- 1 067 005
- EP-A- 1 106 413
- GB-A- 1 571 098

## Beschreibung

Die Erfindung betrifft eine Kühlerbefestigung in einem Kraftfahrzeug mit den im Oberbegriff des Patentanspruches 1 angegebenen Merkmalen.

Eine derartige Kühlerbefestigung ist aus dem Stand der Technik (DE 43 10 144 C1) bekannt. Um ein Kippen des Kühlers entgegen der Fahrzeugfahrtrichtung zu verhindern, werden der fahrzeugfeste Halter und der Gegenhalter des Kühlers durch den über sie geschobenen Federbügel zusammengehalten und gesichert. Der fahrzeugfeste Halter ist von einer Kunststoffmanschette umgeben, und der Gegenhalter des Kühlers ist teilweise in eine Dämpfungsmanschette eingebettet. Der Federbügel umgreift die Kunststoffmanschette und die Dämpfungsmanschette und verspannt damit den fahrzeugfesten Halter und den Gegenhalter des Kühlers.

Diese zum Stand der Technik gehörende Kühlerbefestigung hat den Nachteil, dass sie dem Kühlungsmodul keine Bewegung in der Fahrzeuglängsachse bei großen von außen wirkenden Kräften erlaubt. Bei auftretenden Kräften, wie sie zum Beispiel im Falle des "Dannertestes" entstehen, kann der Kühler im Vorderbau auftretende Deformationen nicht nachvollziehen. Das Kühlermodul erleidet einen Defekt und muss ausgetauscht werden. Die hierbei anfallenden Kosten können sehr hoch sein.

Der "Dannertest" ist Referenz für die Einstufung der Fahrzeuge in Versicherungsklassen und simuliert einen Fahrzeugaufprall mit 16 Kilometern pro Stunde und Offset auf eine spezifizierte Barriere.

Der Erfindung liegt die Aufgabe zugrunde, eine Kühlerbefestigung anzugeben, die dem Kühlungsmodul bei im Wesentlichen in Richtung der Fahrzeuglängsachse auftretenden Kräften ein Ausschwenken des Kühlermoduls erlaubt.

Diese Aufgabe wird erfindungsgemäß durch eine Kühlerbefestigung mit den Merkmalen des Anspruches 1 gelöst.

Dadurch, dass die Kühlerbefestigung aus einem Halter besteht, der zwei Schenkel aufweist, wobei ein Schenkel an der Karosserie befestigt ist und der zweite Schenkel über ein Scharnier mit dem Halter verbunden ist, wird der Kühlerpuffer, der wiederum fest mit dem Kühlermodul verbunden ist, im Falle eines Aufpralles, das heißt bei von außen auftretenden Kräften, welche im Wesentlichen in Richtung der Fahrzeuglängsachse wirken, von dem Halter freigegeben.

Erfindungsgemäß übergreift im montierten Zustand eine Federklammer den Halter und verspannt damit den Kühlerpuffer zwischen den Schenkeln des Halters.

Der zweite Schenkel des Halters, der über das Scharnier mit dem Halter verbunden ist, ist beweglich über das Scharnier mit dem Halter verbunden, derart, dass die Öffnungsrichtung dieses Schenkels von dem Kühlerpuffer weggerichtet ist.

Das Scharnier ist vorteilhaft als Filmscharnier ausgebildet, da diese Scharniere einfach und preiswert herzustellen sind.

Die Freigabe des Kühlerpuffers erfolgt bei im Wesentlichen parallel zur Fahrzeugslängsachse auftretenden Kräften, indem die Federklammer, die den Halter umgreift, auffedert und damit den Schenkel des Halters freigibt.

Die Schenkel des Halters weisen vorteilhaft Nuten für die Aufnahme von Rastnasen, die an der Federklammer angeordnet sind, auf. Hierdurch werden die vertikalen Toleranzen der Einbaulage des Kühlers im Fahrzeug selbsttätig ausgeglichen.

Die Federklammer weist vorteilhaft einen U-förmigen Querschnitt mit zwei Schenkeln und einer Basis auf. Die Schenkel weisen gemäß einer vorteilhaften Ausführungsform im Endbereich der Schenkel jeweils eine Sicke auf. Die Schenkel sind an ihrem Ende darüber hinaus vorteilhaft nach außen abgewinkelt ausgebildet. Durch diese Ausbildung mit der Sicke und den nach außen weisenden Enden laufen die Schenkel während des Einbaus an den Rastnuten des Halters entlang und passen sich den Toleranzen an.

In der Basis der Federklammer ist eine weitere Sicke vorgesehen, die in den U-förmigen Querschnitt der Federklammer hineinragt. Hierdurch liegt die Federklammer unmittelbar an dem Kühlerpuffer an und gewährt damit eine spielfreie Einbaulage des Kühlerpuffers auch in vertikaler Richtung.

Der Halter besteht vorteilhaft aus Kunststoff. Kunststoff hat den Vorteil, dass sich das Filmscharnier einfach und preiswert ausbilden lässt. Darüber hinaus treten keine Korrosionen zwischen der Federklammer und dem Halter auf, und eine Schwingungsübertragung wird ebenfalls vermieden.

Es ist jedoch auch möglich, den Halter aus Druckguss auszubilden und das Scharnier als ein Scharnier mit Stift vorzusehen. Die Wahl von Druckguss hat den Vorteil einer erhöhten Stabilität.

Ausführungsbeispiele der Erfindung sind nachstehend anhand der Zeichnungen näher beschrieben. Es zeigen:
- Fig. 1: ein Kühlungsmodul mit einem Halter in Seitenansicht;
- Fig. 2: einen Schnitt durch den Halter nach der Linie II-II der Fig. 1.

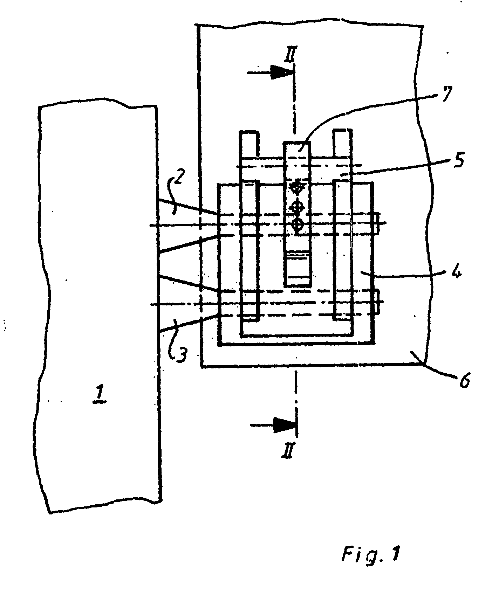

In Figur 1 ist ein Kühlungsmodul 1 (teilweise) dargestellt. Das Kühlungsmodul 1 weist zwei Stege 2, 3 (im Folgenden als Gegenhalter bezeichnet) auf, die von einem Kühlerpuffer 4 umschlossen sind. Der Kühlerpuffer 4 ist in einem Halter 5 angeordnet, der wiederum an einer nur teilweise dargestellten Karosserie 6 befestigt ist. Der Halter 5 wird teilweise von einer Federklammer 7 umgriffen.

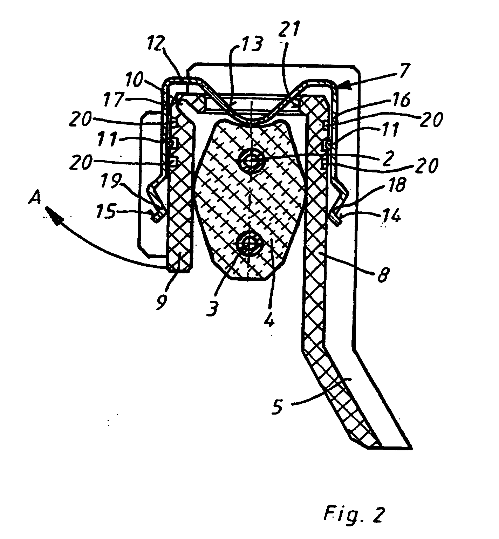

Gemäß Figur 2 weist der Halter 5 einen U-förmigen Querschnitt auf, wobei ein erster Schenkel 8 fest mit der Karosserie 6 (in Figur 2 nicht dargestellt) verbunden ist. Ein zweiter Schenkel 9 ist über ein Filmscharnier 10 mit dem Halter 5 verbunden. Zwischen den Schenkeln 8, 9 ist der Kühlerpuffer 4 mit dem Gegenhalter 2, 3 angeordnet und wird mit der Federklammer 7, welche die Schenkel 8, 9 des Halters teilweise übergreift, verspannt.

Der Kühler 1 ist in seinem unteren Bereich über zwei nicht dargestellte Auflager mit einem Karosserieteil des Kraftfahrzeuges verbunden. In seinem oberen Bereich stützt sich der Kühler 1 auf jeder Seite mit den Gegenhaltern 2, 3, welche am Kühler 1 befestigt sind, an einem fahrzeugfesten Halter 5 ab. Um ein Kippen des Kühlers 1 entgegen der Fahrzeugfahrtrichtung zu verhindern, werden der Halter 5 und der Gegenhalter 2 durch eine über sie geschobene Federklammer 7 zusammengehalten und gesichert.

Bei Auftreten von äußeren Kräften, welche im Wesentlichen parallel zur Fahrzeuglängsachse verlaufen, federt die Federklammer 7 auf und gibt den Schenkel 9 frei, derart, dass er in Richtung des Pfeiles A aufschwenkt und den Kühlerpuffer 4 mit dem Gegenhalter 2, 3 freigibt. Das Kühlungsmodul 1 kann dann aus dem Crashbereich ausschwenken und wird nicht beschädigt.

Die Schenkel 8, 9 des Halters 5 weisen Nuten 20 auf, in welche Rastnasen 11 der Federklammer 7 greifen. Hierdurch werden vertikale Toleranzen der Einbaulage des Kühlungsmoduls 1 ausgeglichen.

Die Federklammer 7 weist in ihrer Basis 12 eine in den U-förmigen Querschnitt der Federklammer 7 hineinragende Sicke 13 auf. Die Federklammer 7 greift durch eine Öffnung 21 des Halters 5 und liegt mit der Sicke 13 an dem Kühlerpuffer 4 an. Hierdurch wird der Kühlerpuffer 4 und damit auch das Kühlungsmodul 1 auch in vertikaler Richtung spielfrei gelagert, wobei sich die spielfreie Lagerung durch das Vorsehen der Rastnasen 11 selbst reguliert.

Die Enden 14, 15 der Schenkel 16, 17 der Federklammer 7 sind nach außen abgewinkelt ausgebildet. Darüber hinaus sind Sicken 18, 19 in den Schenkeln 16, 17 vorgesehen. Durch diese Ausbildung der Schenkel 16, 17 der Federklammer 7 ist gewährleistet, dass die Federklammer 7 beim Aufschieben auf den Halter 5 über die Rastnuten 13 läuft und sich den Toleranzen anpasst.

### Bezugszeichenliste

- Kühlungsmodul: 1
- Stege: 2, 3
- Kühlerpuffer: 4
- Halter: 5
- Karosserie: 6
- Federklammer: 7
- Schenkel: 8
- Schenkel: 9
- Scharnier: 10
- Rastnasen: 11
- Basis: 12
- Sicke: 13
- Enden der Schenkel der Federklammer 7: 14, 15
- Schenkel der Federklammer 7: 16, 17
- Sicken: 18, 19
- Nuten: 20
- Öffnung: 21
- Pfeil: A

## Patentansprüche

1. Kühlerbefestigung in einem Kraftfahrzeug mit einem an einer Karosserie (6) befestigten Halter (5) und wenigstens einem am Kühlungsmodul (1) befestigten Gegenhalter (2; 3), der in einem Kühlerpuffer (4) angeordnet ist, und mit einer außen an dem Halter anliegenden Federklammer (7), die den Gegenhalter (2, 3) über den Kühlerpuffer (4) am fahrzeugfesten Halter (5) verspannt, **dadurch gekennzeichnet, dass** der Halter (5) zwei Schenkel (8, 9) aufweist, wobei der erste Schenkel (8) an der Karosserie (6) befestigt ist und der zweite Schenkel (9) über ein Scharnier (10) mit dem Halter (5) verbunden ist.

2. Kühlerbefestigung nach Anspruch 1, **dadurch gekennzeichnet, dass** der zweite Schenkel (9) über ein Filmscharnier (10) mit dem Halter (5) verbunden ist.

3. Kühlerbefestigung nach Anspruch 1, **dadurch gekennzeichnet, dass** die Öffnungsrichtung des zweiten Schenkels (9) des Halters (5) von dem Kühlerpuffer (4) weggerichtet ist.

4. Kühlerbefestigung nach Anspruch 1, **dadurch gekennzeichnet, dass** die Schenkel (8, 9) des Halters (5) Nuten (20) für die Aufnahme von Rastnasen (11) der Federklammer (7) aufweisen.

5. Kühlerbefestigung nach Anspruch 1, **dadurch gekennzeichnet, dass** die Federklammer (7) einen U-förmigen Querschnitt mit zwei Schenkeln (16, 17) und einer Basis (12) aufweist, und dass die Schenkel (16, 17) jeweils wenigstens eine Sicke (18, 19) aufweisen.

6. Kühlerbefestigung nach Anspruch 5, **dadurch gekennzeichnet, dass** die Basis (12) der Federklammer (7) eine in den U-förmigen Querschnitt hineinragende Sicke (13) aufweist.

7. Kühlerbefestigung nach Anspruch 6, **dadurch gekennzeichnet, dass** die Sicke (13) durch den Halter (5) greift und am Kühlerpuffer (4) im montierten Zustand anliegend ausgebildet ist.

## Claims

1. Radiator fastening in a motor vehicle with a bracket (5) fastened to a vehicle body (6) and at least one counter-bracket (2, 3) which is fastened to the cooling module (1) and arranged in a radiator buffer (4), and with a spring clip (7) which abuts against the outside of the bracket and which braces the counter-bracket (2, 3) via the radiator buffer (4) against the bracket (5) which is fixed to the vehicle, **characterised in that** the bracket (5) has two arms (8, 9), wherein the first arm (8) is fastened to the body (6) and the second arm (9) is connected via a hinge (10) to the bracket (5).

2. Radiator fastening according to claim 1, **characterised in that** the second arm (9) is connected via a film hinge (10) to the bracket (5).

3. Radiator fastening according to claim 1, **characterised in that** the direction of opening of the second arm (9) of the bracket (5) is directed away from the radiator buffer (4).

4. Radiator fastening according to claim 1, **characterised in that** the arms (8, 9) of the bracket (5) have grooves (20) for receiving latch lugs (11) of the spring clip (7).

5. Radiator fastening according to claim 1, **characterised in that** the spring clip (7) has a U-shaped cross-section with two arms (16, 17) and a base (12), and **in that** the arms (16, 17) each have at least one bead (18, 19).

6. Radiator fastening according to claim 5, **characterised in that** the base (12) of the spring clip (7) has a bead (13) extending into the U-shaped cross-section.

7. Radiator fastening according to claim 6, **characterised in that** the bead (13) engages through the bracket (5) and is designed to abut against the radiator buffer (4) in the assembled state.

## Revendications

1. Fixation de radiateur sur un véhicule comprenant un support (5) fixé sur une carrosserie (6) et au moins un contre-support (2, 3) fixé sur le module de refroidissement (1), qui est disposé dans un butoir de radiateur (4), et une bride de ressort (7) s'appuyant extérieurement sur le support, lequel tend le contre-support (2, 3) au moyen du butoir de radiateur (4) sur le support (5) solidaire du véhicule, **caractérisée en ce que** le support (5) présente deux branches (8, 9), la première branche (8) étant fixée sur la carrosserie (6) et la seconde branche (9) étant reliée au support (5) par une charnière (10).

2. Fixation de radiateur selon la revendication 1, **caractérisée en ce que** la seconde branche (9) est reliée au support (5) par une charnière en film (10).

3. Fixation de radiateur selon la revendication 1, **caractérisée en ce que** le sens d'ouverture de la seconde branche (9) du support (5) est orienté dans le sens opposé au butoir de radiateur (4).

4. Fixation de radiateur selon la revendication 1, **caractérisée en ce que** les branches (8, 9) du support (5) présentent des rainures (20) pour le logement d'ergots de verrouillage (11) de l'étrier de ressort (7).

5. Fixation de radiateur selon la revendication 1, **caractérisée en ce que** la bride de ressort (7) présente une section en forme de U avec deux branches (16, 17) et une base (12), et **en ce que** les branches (16, 17) présentent chacune au moins une moulure (18, 19).

6. Fixation de radiateur selon la revendication 5, **caractérisée en ce que** la base (12) de la bride de ressort (7) présente une moulure (13) dépassant à l'intérieur de la section transversale en forme de U.

7. Fixation de radiateur selon la revendication 6, **caractérisée en ce que** la moulure (13) s'engage à travers le support (5) et est conçue en s'appuyant dans l'état monté sur le butoir de radiateur (4).
